# EUROPEAN PATENT SPECIFICATION

(11) **EP 2 899 945 B1**
(45) Date of publication and mention of the grant of the patent: **13.01.2021**
(21) Application number: 14152282.1
(22) Date of filing: 23.01.2014
(51) Int. Cl.: H04L 29/08, H04W 4/00, H04W 4/14

(54) **Method for an enhanced communication between a first network node and a second network node of a telecommunications network, and telecommunications network**
Verfahren für eine verbesserte Kommunikation zwischen einem ersten Netzknoten und einem zweiten Netzknoten eines Telekommunikationsnetzes, und Telekommunikationsnetz
Procédé pour une communication améliorée entre un premier noeud de réseau et un second noeud de réseau d'un réseau de télécommunication, et un réseau de télécommunication

(43) Date of publication of application: 29.07.2015
(73) Proprietor: Deutsche Telekom AG, 53113 Bonn (DE)
(72) Inventor: Wang, Hao, 53229 Bonn (DE)
(74) Representative: Schwöbel, Thilo K.

(56) References cited:
- WO-A1-2006/077283
- WO-A1-2007/031708
- WO-A1-2013/105809
- WO-A2-2010/001276
- US-A1- 2009 158 397

## Description

### BACKGROUND

The present invention relates inter alia to a method for an enhanced communication between a user equipment and a telecommunications network, wherein the user equipment comprises an application and a short message push client, wherein the telecommunications network comprises an application server and a short message push server, wherein the application uses push notifications received from the telecommunications network.

Furthermore, the present invention relates to a telecommunications network for an enhanced communication between a user equipment and the telecommunications network, wherein the user equipment comprises an application and a short message push client, wherein the telecommunications network comprises an application server and a short message push server, wherein the application uses push notifications received from the telecommunications network.

Additionally, the present invention relates to a user equipment for an enhanced communication between the user equipment and a telecommunications network, wherein the user equipment comprises an application and a short message push client, wherein the telecommunications network comprises an application server and a short message push server, wherein the application uses push notifications received from the telecommunications network.

Furthermore, the present invention relates to a program comprising a computer readable program code and a computer program product for using a telecommunications network comprising a computer program which, when executed on a computer and/or on a network node of a telecommunications network, especially an application server and/or a short message push server, and/or on a user equipment, especially in part on the network node of the telecommunications network and in part on the user equipment, causes the computer and/or the network node of the telecommunications network and/or the user equipment to perform the inventive method.

Telecommunications networks, and the usage of push notifications within telecommunications network are well known. To provide mobility and portability to the devices interconnected by telecommunications networks such as the internet, wireless and mobile computing devices, or user equipments, have been introduced. With mobile device or user equipments using wireless data networks, people are able to travel and yet perform tasks as if they would be connected to the telecommunications network in a stationary manner.

To be timely and periodically informed, one way is to electronically communicate the information requests from a mobile device that is connected to a wireless data network or mobile telecommunications network. The mobile telecommunications network, for example, connects, through a proxy server, to an information server from which the desired information can be retrieved by the mobile device (or user equipment) on demand.

When using a push information delivery system, information such as update information, is automatically distributed towards users of mobile devices or user equipments. One example of a system able to transmit push notifications to the mobile device or user equipment is to use Internet Protocol communication between the telecommunications network and the mobile device or user equipment. Internet Protocol push notifications are commonly used on mobile platforms like iOS, Android, Windows Phone and others. Moreover, every mobile platform has its own implementation which makes it difficult to handle cross-platform push notifications.

However, such push notifications are not always delivered to the device on time, especially in bad network situations. Furthermore, transmitting Internet Protocol push notifications requires an Internet Protocol connection being established between the mobile device or user equipment on the one hand and the telecommunications network on the other hand. Especially for mobile devices, it is a drawback that Internet Protocol push notifications requires long-live Internet Protocol connections to the notification server (or push server), which consumes resources and battery of the mobile device. Furthermore, there are typically different implementations of push notification services on each mobile platform (such as iOS, Android, Windows Phone, etc.).

Another example of systems able to transmit push notifications is the Short Messaging System (SMS) of the GSM (Global System for Mobile Communication) standard of wireless networks. However, the Short Messaging System is typically not suited to transmit push notifications as the SMS system is only useful for very short messages WO 2006/077283, US 2009/158397, WO 2010/00127, WO 2007/031708 and WO 2013/105809 are considered prior art. SUMMARY

The invention is defined by the appended claims. An object of the present invention is to provide a method for an enhanced communication between a user equipment and a telecommunications network, wherein the user equipment comprises an application and a short message push client, wherein the telecommunications network comprises an application server and a short message push server, wherein the application uses push notifications received from the telecommunications network, and wherein the communication is enhanced in that push notifications are transmitted reliably and timely towards the user equipment without the need to continuously maintain an Internet Protocol connection with the telecommunications network.

The object of the present invention is achieved by a method for an enhanced communication between a user equipment and a telecommunications network, wherein the user equipment comprises an application and a short message push client, wherein the telecommunications network comprises an application server and a short message push server, wherein the application uses push notifications received from the telecommunications network, wherein in case that a push notification is to be sent from the application server to the application of the user equipment the method comprises the following steps:
-- in a first step, information related to the push notification to be sent is transmitted from the application server to the short message push server,
-- in a second step, the push notification is transmitted from the short message push server to the short message push client,
-- in a third step, the push notification, received by the short message push client, is made available to the application of the user equipment,
wherein the push notification is transmitted from the short message push server to the short message push client as at least one short message according to the short message service protocol (SMS protocol), wherein the at least one short message is of a binary message format.

According to the present invention it is thereby advantageously possible to enable an enhanced communication between the user equipment or the mobile device on the one hand and the telecommunications network on the other hand by using an SMS channel to transmit the push notification. In the context of the present invention, the term "SMS channel" designates the transmittal of information using the SMS protocol (short message service protocol) at least on the air interface between the telecommunications network and the mobile device of user equipment. By using the SMS channel, i.e. by using the short message protocol (SMS protocol), it is advantageously possible according to the present invention to assure the delivery of the push notification to the mobile device (or user equipment) (i.e. to assure that the push notification is always delivered), and to assure a delivery to the mobile device (or user equipment) on time, especially in bad network conditions.

In case that an Internet Protocol connection is established between the mobile device (or user equipment) and the telecommunications network, the term "using the SMS protocol" also designates using SMS over IP functionality by virtue of which the user equipment is provided with the capability of sending traditional short messages over the IMS (IP Multimedia Subsystem) network.

It is advantageously possible according to the present invention, that long-live Internet Protocol connections between the user equipment (or mobile device) to the notification server (or push server) can be avoided if such connections are not required for other reasons.

Additionally, by using an SMS channel to transmit the push notification, it is advantageously possible to natively and automatically adapt the transmission of push notifications to different implementations of push notification services on different mobile platforms (such as iOS, Android, Windows Phone, etc.).

According to the present invention, the telecommunications network (used in the inventive method) is a mobile telecommunications network, comprising an access network and a core network, for providing mobile communication services to mobile devices (or user equipments). Typically such a telecommunications network comprises a backbone, and a plurality of base station entities in order to provide mobile communication to user equipments.

Furthermore according to the present invention, it is advantageously possible to use one short message or a plurality of short messages such that the data content of the push notification is contained in the one short message or plurality of short messages, wherein the short message or messages is/are of a binary message format.

In the context of the present invention, the term binary message format (in contrast to using text data in the short message, encoded using typically either the GSM alphabet or UCS-2 (Universal Character Set, encoded in two bytes) designates that the one short message or plurality of short messages used to transmit the push notification to be sent to the mobile device or user equipment
-- is or are flagged as a binary SMS message (and hence comprising 8-bit binary data used to transmit the information content of the push notification to be transmitted) and/or
-- has or have a binary UDH (User Data Header) added, typically at the beginning of the short message, the UDH being used to transmit special information about the short message (and hence the push notification).
Typically, binary data and UDHs are used in combination, with the short message containing binary data and the UDH giving instructions about how to interpret the binary data.

According to the present invention, it is likewise possible and preferred that the at least one short message (transmitted from the short message push server to the short message push client within the user equipment or mobile device) comprises both, content in binary message format and content (text) according to the standard GSM alphabet or UCS-2 text.

Furthermore according to the present invention, it is preferred that the one short message and/or the plurality of short messages is a concatenated short message or are concatenated short messages, i.e. a short message or short messages that are longer than the basic limit (of, e.g., 140 bytes per short message). A concatenated message is typically composed by a sequence of parts (or fragments), wherein each part (or fragment) is an SMS message in itself, with, e.g., a UDH that bear enough information to reassemble the parts (or fragments) at by the short message push client of the user equipment or the mobile device. Such parts (fragments) of a concatenated short message might arrive in any order; if some part (or fragment) is lost - or arrives too late - the recipient's phone might need to display only the part of the message that was received.

It is furthermore preferred according to the present invention that delivery reports (or delivery receipts) are used to acknowledge the reception of a short message or a plurality of short messages by the user equipment. If this feature is enabled (which might be optional but could also be mandatory), when the one SMS message or the plurality of SMS messages reach(es) its/their destination, a delivery report is generated and sent back to the sender to report that the message was delivered.

Summarizing, according to the present invention, instead of an Internet Protocol connection, a more reliable and reachable SMS channel is used to deliver push notifications to applications on mobile devices (or user equipments), also called mobile applications. According to the present invention, it is preferred that the (mobile) application first registers with the short message push server and stores an information (identification information or token information) with its own app(lication) server. Then, in case of an event triggered by the app(lication) server, the short message push server will encode a message (push notification) as binary SMS and sent it to a specific port on the user equipment. Then short message push client on the mobile device decodes the binary SMS and distributes it to the application, in a form that is supported by the underlying platform, e.g. iOS, Android, Windows Phone.

According to the present invention, it is preferred that the at least one short message is - while being sent according to the short message service protocol (SMS protocol) - routed by means of native SMS routing mechanism or by means of using Internet Protocol transport means, in dependence of priorities and/or available capacities of the telecommunications network.

Furthermore, it is preferred according to the present invention that - in order to transmit the push notification from the short message push server of the telecommunications network to the short message push client of the user equipment - an established Internet Protocol connection does not need to be established between the user equipment and the telecommunications network.

Thereby it is advantageously possible that the routing can be flexibly optimized, especially in order to balance the load of the telecommunications network, e.g. the operator of the telecommunications network may select to route the push message via SMS (i.e. without using any Internet Protocol functionality or Internet Protocol connectivity) or by using Internet Protocol (especially by encapsulating the SMS channel in Internet Protocol data packets.

Furthermore according to the present invention, it is preferred that during the first step, the information related to the push notification to be sent to the user equipment comprises an identification information and/or a token information, wherein the identification information and/or the token information identifies the user equipment and/or the instance of the application.

Thereby, it is advantageously possible according to the present invention that by means of the identification information and/or the token information,
-- the short message push client and/or
-- the instance of the application (on the user equipment) and/or
-- the user equipment and/or
-- both the short message push client and the instance of the application (on the user equipment) and/or
-- both the short message push client and the user equipment and/or
-- both the instance of the application (on the user equipment) and the user equipment and/or
-- the instance of the application (on the user equipment), the user equipment, and the short message push client
is or are identified and thus the token can be used to direct the one or plurality of short messages to the short message push client (i.e. the user equipment).

The identification information or token information is preferably an information generated based on phone number of the user equipment and an app(lication) id(entifier). Via the phone number of the user equipment, it is known where the SMS should be sent to (i.e. to which mobile device); via app(lication) id(entifier), it is known, to which app(lication) the push notification should be directed. Preferably, the link between the phone number (of the user equipment), app(lication) id(entifier) and the token information is stored only on the SMS push server, so a leak of private information (like the phone number) is avoided.

Still furthermore, it is preferred according to the present invention that during a registration acknowledgment step prior to conducting the first step, a first registration acknowledgement message is sent from the short message push server to the short message push client, the first registration acknowledgement message comprising the identification information and/or the token information, and/or a second registration acknowledgement message is sent from the short message push client to the application, the second registration acknowledgement message comprising the identification information and/or the token information.

Thereby, it is advantageously possible that the short message push client and/or the application in the user equipment is able to store the identification information and/or the token information.

Furthermore, it is preferred according to the present invention that during a registration request step prior to the registration acknowledgment step, a first registration request message is sent from the application to the short message push client, and/or a second registration request message is sent from the short message push client to the short message push server.

Thereby, it is advantageously possible that the registration process can be initiated by the application on the user equipment.

Still furthermore, it is preferred according to the present invention that in the at least one short message used to transmit the push notification, a compression and/or an encryption method is used.

Thereby, it is advantageously possible that less time is needed to transmit the push notification (as less short messages need to be used to transport a given amount of information compared to not applying a compression method). Furthermore, the transmittal of the push notification is more reliable (likewise as less short messages are used). To use an encryption method contributes to enhancing privacy of the information conveyed by the push notification.

The present invention also relates to a telecommunications network for an enhanced communication between a user equipment and the telecommunications network, wherein the user equipment comprises an application and a short message push client, wherein the telecommunications network comprises an application server and a short message push server, wherein the application uses push notifications received from the telecommunications network, wherein the telecommunications network is configured such that in case that a push notification is to be sent from the application server to the application of the user equipment:
-- information related to the push notification to be sent is transmitted from the application server to the short message push server,
-- the push notification is transmitted from the short message push server to the short message push client,
-- the push notification, received by the short message push client, is sent to the user equipment,
wherein the telecommunications network is configured such that the push notification is transmitted from the short message push server to the short message push client as at least one short message according to the short message service protocol (SMS protocol), wherein the at least one short message is of a binary message format.

According to the present invention it is thereby advantageously possible to enable an enhanced communication between the user equipment and the telecommunications network by using an SMS channel. In case that an Internet Protocol connection is established between the mobile device (or user equipment) and the telecommunications network, the term "using the SMS protocol" also designates using SMS over IP functionality by virtue of which the user equipment is provided with the capability of sending traditional short messages over the IMS (IP Multimedia Subsystem) network. According to the present invention, long-live Internet Protocol connections between the user equipment and the notification server (or push server) can be avoided if such connections are not required for other reasons. Likewise, the other above mentioned advantages of the inventive method apply - mutatis mutandis - also to the inventive telecommunications network.

According to the present invention - also with respect to the telecommunications network - it is preferred that the telecommunications network is configured such that the at least one short message is - while being sent according to the short message service protocol (SMS protocol) - routed by means of native SMS routing mechanism or by means of using Internet Protocol transport means, in dependence of priorities and/or available capacities of the telecommunications network.

Furthermore according to the present invention - also with respect to the telecommunications network - it is preferred that the telecommunications network is configured such that - in order to transmit the push notification from the short message push server of the telecommunications network to the short message push client of the user equipment - an established Internet Protocol connection does not need to be established between the telecommunications network and the user equipment.

Additionally - also with respect to the telecommunications network - it is preferred that the telecommunications network is configured such that the information related to the push notification to be sent to the user equipment comprises an identification information and/or a token information, wherein the identification information and/or the token information identifies the user equipment and/or the instance of the application.

Additionally - also with respect to the telecommunications network - it is preferred that the telecommunications network is configured such that prior to sending the information related to the push notification from the application server to the short message push server,
-- a first registration acknowledgement message is sent from the short message push server to the short message push client, the first registration acknowledgement message comprising the identification information and/or the token information, and/or
-- a second registration acknowledgement message is sent from the short message push client to the application, the second registration acknowledgement message comprising the identification information and/or the token information.

Furthermore, the present invention relates to a user equipment for an enhanced communication between the user equipment and a telecommunications network, wherein the user equipment comprises an application and a short message push client, wherein the telecommunications network comprises an application server and a short message push server, wherein the application uses push notifications received from the telecommunications network, wherein the user equipment is configured such that in case that a push notification is to be sent from the application server to the application of the user equipment:
-- information related to the push notification to be sent is transmitted from the application server to the short message push server,
-- the push notification is transmitted from the short message push server to the short message push client,
-- the push notification, received by the short message push client, is sent to the user equipment,
wherein the user equipment is configured such that the push notification is transmitted from the short message push server to the short message push client as at least one short message according to the short message service protocol (SMS protocol), wherein the at least one short message is of a binary message format.

According to the present invention it is thereby advantageously possible to enable an enhanced communication between the user equipment and the telecommunications network by using an SMS channel. Likewise, the other above mentioned advantages of the inventive method and of the inventive telecommunications network apply - mutatis mutandis - also to the inventive user equipment.

Furthermore, the present invention relates to a program comprising a computer readable program code which, when executed on a computer and/or on a network node of a telecommunications network, especially an application server and/or a short message push server, and/or on a user equipment, especially in part on the network node of the telecommunications network and in part on the user equipment, causes the computer and/or the network node of the telecommunications network and/or the user equipment to perform the inventive method.

The present invention also relates to computer program product for using a core network of a telecommunications network, the computer program product comprising a computer program stored on a storage medium, the computer program comprising program code which, when executed on a computer and/or on a network node of a telecommunications network, especially an application server and/or a short message push server, and/or on a user equipment, especially in part on the network node of the telecommunications network and in part on the user equipment, causes the computer and/or the network node of the telecommunications network and/or the user equipment to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a conventional telecommunications network comprising an access network and a core network, as well as user equipment as mobile devices.
Figure 2 schematically illustrates a communication diagram implementing the inventive method and used by the inventive user equipment and telecommunications network.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

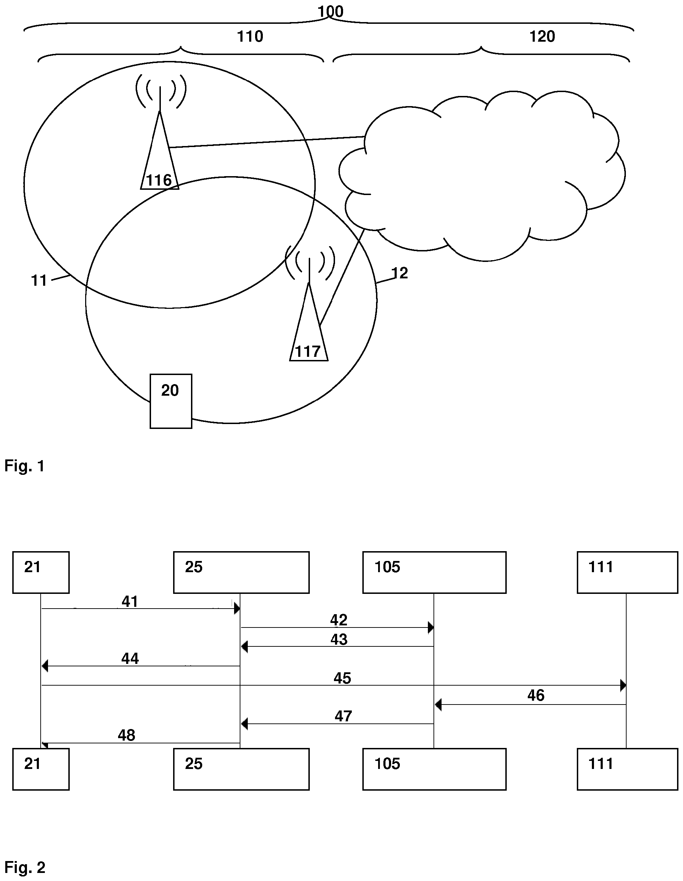

In Figure 1, a mobile telecommunications network 100 (or public land mobile network public land mobile network)is schematically shown, wherein the telecommunications network 100 comprises an access network 110 and a core network 120. The access network 110 typically comprises a plurality of base stations (or base station entities). Only two such base station entities (or base stations) 116, 117 are schematically represented in Figure 1, together with corresponding radio cells 11, 12. Typically, such a mobile telecommunications network 100 comprises a plurality of user equipments or mobile devices, only one user equipment (or mobile device) 20 is schematically represented in Figure 2. Such a telecommunications network 100 is typically used to provide mobile communication to the connected user equipments or mobile devices 20.

Figures 2 schematically shows a communication diagram implementing the inventive method and used by the inventive user equipment 20 and telecommunications network 100. The communication diagram of Figure 2 involves an application 21 as well as an short message push client 25. The application 21 and the short message push client 25 are located on the user equipment 20 (or mobile device). The communication diagram of Figure 2 further involves an application server 111 as well as an short message push server 105. The application server 111 and the short message push server 105 are located either within the same or separate nodes of the telecommunications network 100. The short message push server 105 is, e.g., an an SMSC (SMS Service Center) with extensions to handle extra requirements for treating and transmitting push notifications. The application server 111 connects to the short message push server 105 preferably via the SMS gateway. In a first processing step 41, the application 21 registers with an identifier of the app(lication) for push notification. In a second processing step 42, the short message push client 25 sends a registration SMS towards the short message push server 105. In a third processing step 43, the short message push server 105 returns a confirmation SMS with an identification information and/or token information to the short message push client 25. In a fourth processing step 44, the short message push client 25 sends the identification information and/or token information to the application 21. In a fifth processing step 45, the application 21 sends the identification information and/or token information to the application server 111. After the fifth processing step 45, the registration process is terminated.

According to variants of the fifth processing step 45, the application 21
-- either sends (as depicted in Figure 2) the identification information and/or token information, as well as additional application specific information to the application server 111,
-- or the application 21 sends (not depicted in Figure 2) the identification information and/or token information, as well as additional application specific information via SMS to the short message push server 105 which then forwards this information to the application server 111; this second alternative makes sure that the register process works even without any Internet Protocol connection between the user equipment 20 and the telecommunications network 100.

In case that an event is triggered by the app(lication) server 111, the short message push server 105 will encode a message (push notification) as binary SMS and sent it to a specific port on the user equipment 20. Then short message push client 25 on the mobile device 20 decodes the binary SMS and distributes it to the application 21 in a form that is supported by the underlying platform, e.g. iOS, Android, Windows Phone. Hence, in a sixth processing step 46, the application server 111 initiates the transmission of a push notification with the identification information and/or token information by sending an information related to the push notification to the short message push server 105. In a seventh processing step 47, the short message push server 105 sends a push notification SMS to the short message push client 25, i.e. the push notification is transmitted using either one short message according to the short message service protocol (SMS protocol) or a plurality of short messages according to the short message service protocol (SMS protocol). In an eighth processing step 48, the short message push client 25 distributes the push notification to the app(lication) 21.

Hence, according to the present invention, the transmission of the push notification from the application server 111 towards the user equipment 20 (or application 21) is provided by the three steps:
-- in a first step, information related to the push notification to be sent is transmitted from the application server 111 to the short message push server 105,
-- in a second step, the push notification is transmitted from the short message push server 105 to the short message push client 25,
-- in a third step, the push notification, received by the short message push client 105, is made available to the application 21 of the user equipment 20.

According to the present invention, the push notification is transmitted from the short message push server 105 to the short message push client 25 as at least one short message according to the short message service protocol (SMS protocol), wherein the at least one short message is of a binary message format. If one binary SMS is not enough, multiple SMS messages are used for one push notification.

Regarding the registration process, it is critical that in the application server 111, an identification information and/or token information is known that is associated with a specific (instance) of an app(lication) on the user equipment 20. It is preferred according to the present invention, that the identification information is generated by the short message push server 105 and provided to the application server 111. One manner of providing the identification information and/or the token information to the application server 111 is by sending it (according to the third processing step 43, the fourth processing step 44, and the fifth processing step 45) via the user equipment (or the application 21) to the application server 111.

In the following, examples of short messages according to the present invention (for the transmission of push notifications and/or for the registration process) are given:

### A. Registration SMS Sample:

1. Data Content in Json format
   {"spn":{"register":{"platform":"android", "appid":"com.android.sampleapp" }}}
2. Compressed (optional)
3. Binary SMS
   069110090000F111000A9210299232900004AA4D7B2273706E223A7B227265676973746572223A7B22706C6174666F726D1 D3A1 D616E64726F69641 C2C20226170706964223A22636F6D2E616E64726F69642E73616D706C6561707022207D7D7D

### Explanations:

Json is the exemplary format of the Push Notification message; compression is optional; "spn" stands for "SMS Push Notification"; Appid is platform specific, for Android it is, e.g., the package name.

### B. Confirmation SMS Sample:

1. Data Content in Json format
   {"spn":{"confirm":{"token":"cd725b8b6f94457496e143303e958bd8"}}}
2. Compressed (optional)
3. Binary SMS
   069110090000F111000A9210299232900004AA407B2273706E223A7B22636F6E6669726D223A7B22746F6B656E223A22636437323562386236663934343537343 9366531343333303365393538626438227D7D7D

### Explanations:

Json is the format of Push Notification message; compression is optional; "spn" stands for "SMS Push Notification"

### C. Push Notification SMS Sample:

1. Data Content in Json format
   {"spn":{"appid":"com.android.sampleapp", "alert":{"title":"hello", "content":"you are welcome"}}}
2. Compressed
   For example, a deflate compression algorithm or another algorithm is to be used so that 256 characters can be transmitted via a short message (i.e. with a limit of 140 characters).
3. Binary SMS
   069110090000F111000A9210299232900004AA62207B2273706E223A7B226170706964223A22636F6D2E616E64726F69642E73616D706C65617070222C2022616C657274223A7B227469746C65223A2268656C6C6F222C2022636F6E74656E74223A22796F75206172652077656C636F6D65227D7D7D

### Explanations:

Json is the format of Push Notification message; the data content is, in principle, not limited but it is advantageous to follow platform specific format if necessary; compression is recommended.

## Claims

1. Method for an enhanced communication between a user equipment (20) and a telecommunications network (100), wherein the user equipment (20) comprises an application (21) and a short message push client (25), wherein the telecommunications network (100) comprises an application server (111) and a short message push server (105), wherein the application (21) uses push notifications received from the telecommunications network (100), wherein in case that a push notification is to be sent from the application server (111) to the application (21) of the user equipment (20) the method comprises the following steps:
-- in a first step, information related to the push notification to be sent is transmitted from the application server (111) to the short message push server (105),
-- in a second step, the push notification is transmitted from the short message push server (105) to the short message push client (25),
-- in a third step, the push notification, received by the short message push client (25), is made available to the application (21) of the user equipment (20),
wherein the push notification is transmitted from the short message push server (105) to the short message push client (25) as at least one short message according to the short message service protocol (SMS protocol), wherein the at least one short message is of a binary message format, wherein during a registration acknowledgment step prior to conducting the first step, a first registration acknowledgement message is sent from the short message push server (105) to the short message push client (25), the first registration acknowledgement message comprising a token information,
wherein during the first step, the information related to the push notification to be sent to the user equipment (20) comprises the token information, wherein the token information identifies the user equipment (20) and/or the instance of the application (21),
wherein during a registration request step prior to the registration acknowledgment step, a first registration request message is sent from the application (21) to the short message push client (25), and a second registration request message is sent from the short message push client (25) to the short message push server (105), wherein the token information is an information generated based on a phone number of the user equipment (20) and an application (21) identifier,
wherein a link between the phone number of the user equipment (20), the application (21) identifier and the token information is stored only on the short message push server (105).

2. Method according to claim 1, wherein the at least one short message is - while being sent according to the short message service protocol (SMS protocol) - routed by means of native SMS routing mechanism or by means of using Internet Protocol transport means, in dependence of priorities and/or available capacities of the telecommunications network (100).

3. Method according to one of the preceding claims, wherein - in order to transmit the push notification from the short message push server (105) of the telecommunications network (100) to the short message push client (25) of the user equipment (20) - an established Internet Protocol connection does not need to be established between the user equipment (20) and the telecommunications network (100).

4. Method according to one of the preceding claims, wherein during a registration acknowledgment step prior to conducting the first step, a second registration acknowledgement message is sent from the short message push client (25) to the application (21), the second registration acknowledgement message comprising the token information.

5. Method according to one of the preceding claims wherein in the at least one short message used to transmit the push notification, a compression and/or an encryption method is used.

6. Telecommunications network (100) for an enhanced communication between a user equipment (20) and the telecommunications network (100), wherein the user equipment (20) comprises an application (21) and a short message push client (25), wherein the telecommunications network (100) comprises an application server (111) and a short message push server (105), wherein the application (21) uses push notifications received from the telecommunications network (100), wherein the telecommunications network (100) is configured such that in case that a push notification is to be sent from the application server (111) to the application (21) of the user equipment (20):
-- information related to the push notification to be sent is transmitted from the application server (111) to the short message push server (105),
-- the push notification is transmitted from the short message push server (105) to the short message push client (25),
-- the push notification, received by the short message push client (25), is sent to the user equipment (20),
wherein the telecommunications network (100) is configured such that the push notification is transmitted from the short message push server (105) to the short message push client (25) as at least one short message according to the short message service protocol (SMS protocol), wherein the at least one short message is of a binary message format, wherein the telecommunications network (100) is configured such that prior to sending the information related to the push notification from the application server (111) to the short message push server (105),
-- a first registration acknowledgement message is sent from the short message push server (105) to the short message push client (25), the first registration acknowledgement message comprising a token information,
wherein the telecommunications network (100) is configured such that the information related to the push notification to be sent to the user equipment (20) comprises the token information, wherein the token information identifies the user equipment (20) and/or the instance of the application (21),
wherein the telecommunications network (100) is configured such that prior to the a first registration acknowledgement message, a first registration request message is sent from the application (21) to the short message push client (25), and a second registration request message is sent from the short message push client (25) to the short message push server (105),
wherein the token information is an information generated based on a phone number of the user equipment (20) and an application (21) identifier,
wherein the telecommunications network (100) is configured such that a link between the phone number of the user equipment (20), the application (21) identifier and the token information is stored only on the short message push server (105).

7. Telecommunications network (100) according to claim 6, wherein the telecommunications network (100) is configured such that the at least one short message is - while being sent according to the short message service protocol (SMS protocol) - routed by means of native SMS routing mechanism or by means of using Internet Protocol transport means, in dependence of priorities and/or available capacities of the telecommunications network (100).

8. Telecommunications network (100) according to claims 6 or 7, wherein the telecommunications network (100) is configured such that - in order to transmit the push notification from the short message push server (105) of the telecommunications network (100) to the short message push client (25) of the user equipment (20) - an established Internet Protocol connection does not need to be established between the telecommunications network (100) and the user equipment (20).

9. Telecommunications network (100) according to one of claims 6 to 8, wherein the telecommunications network (100) is configured such that prior to sending the information related to the push notification from the application server (111) to the short message push server (105),
-- a second registration acknowledgement message is sent from the short message push client (25) to the application (21), the second registration acknowledgement message comprising the token information.

10. User equipment (20) for an enhanced communication between the user equipment (20) and a telecommunications network (100), wherein the user equipment (20) comprises an application (21) and a short message push client (25), wherein the telecommunications network (100) comprises an application server (111) and a short message push server (105), wherein the application (21) uses push notifications received from the telecommunications network (100), wherein the user equipment (20) is configured such that in case that a push notification is to be sent from the application server (111) to the application (21) of the user equipment (20):
-- information related to the push notification to be sent is transmitted from the application server (111) to the short message push server (105),
-- the push notification is transmitted from the short message push server (105) to the short message push client (25),
-- the push notification, received by the short message push client (25), is sent to the user equipment (20),
wherein the user equipment (20) is configured such that the push notification is transmitted from the short message push server (105) to the short message push client (25) as at least one short message according to the short message service protocol (SMS protocol), wherein the at least one short message is of a binary message format, wherein the user equipment (20) is configured such that prior to sending the information related to the push notification from the application server (111) to the short message push server (105),
-- a first registration acknowledgement message is sent from the short message push server (105) to the short message push client (25), the first registration acknowledgement message comprising a token information,
wherein the user equipment (20) is configured such that the information related to the push notification to be sent to the user equipment (20) comprises the token information, wherein the token information identifies the user equipment (20) and/or the instance of the application (21),
wherein the user equipment (20) is configured such that prior to the a first registration acknowledgement message, a first registration request message is sent from the application (21) to the short message push client (25), and a second registration request message is sent from the short message push client (25) to the short message push server (105),
wherein the token information is an information generated based on a phone number of the user equipment (20) and an application (21) identifier,
wherein the user equipment (20) is configured such that a link between the phone number of the user equipment (20), the application (21) identifier and the token information is stored only on the short message push server (105).

11. Program comprising a computer readable program code which, when executed on a computer and/or on a network node of a telecommunications network (100), especially an application server (111) and/or a short message push server (105), and/or on a user equipment (20), especially in part on the network node of the telecommunications network (100) and in part on the user equipment (20), causes the computer and/or the network node of the telecommunications network (100) and/or the user equipment (20) to perform a method according one of claims 1 to 5.

12. Computer program product for using a telecommunications network (100), the computer program product comprising a computer program stored on a storage medium, the computer program comprising program code which, when executed on a computer and/or on a network node of a telecommunications network (100), especially an application server (111) and/or a short message push server (105), and/or on a user equipment (20), especially in part on the network node of the telecommunications network (100) and in part on the user equipment (20), causes the computer and/or the network node of the telecommunications network (100) and/or the user equipment (20) to perform a method according one of claims 1 to 5.

## Patentansprüche

1. Verfahren für eine verbesserte Kommunikation zwischen einer Benutzerausrüstung (20) und einem Telekommunikationsnetz (100), wobei die Benutzerausrüstung (20) eine Anwendung (21) und einen Kurznachrichten-Push-Client (25) umfasst, wobei das Telekommunikationsnetz (100) einen Anwendungsserver (111) und einen Kurznachrichten-Push-Server (105) umfasst, wobei die Anwendung (21) Push-Benachrichtigungen verwendet, die von dem Telekommunikationsnetz (100) kommend empfangen werden, wobei für den Fall, dass eine Push-Benachrichtigung von dem Anwendungsserver (111) an die Anwendung (21) der Benutzerausrüstung (20) gesendet werden soll, das Verfahren die folgenden Schritte umfasst:
- in einem ersten Schritt werden Informationen in Bezug auf die zu sendende Push-Benachrichtigung von dem Anwendungsserver (111) an den Kurznachrichten-Push-Server (105) übertragen,
- in einem zweiten Schritt wird die Push-Benachrichtigung von dem Kurznachrichten-Push-Server (105) an den Kurznachrichten-Push-Client (25) übertragen,
- in einem dritten Schritt wird die Push-Benachrichtigung, die durch den Kurznachrichten-Push-Client (25) empfangen wird, der Anwendung (21) der Benutzerausrüstung (20) zur Verfügung gestellt,
wobei die Push-Benachrichtigung von dem Kurznachrichten-Push-Server (105) an den Kurznachrichten-Push-Client (25) als mindestens eine Kurznachricht gemäß dem Short Message Service Protocol (SMS-Protokoll) übertragen wird, wobei die mindestens eine Kurznachricht von einem binären Nachrichtenformat ist,
wobei während eines Registrierungsbestätigungsschrittes vor der Durchführung des ersten Schrittes eine erste Registrierungsbestätigungsnachricht von dem Kurznachrichten-Push-Server (105) an den Kurznachrichten-Push-Client (25) gesendet wird, wobei die erste Registrierungsbestätigungsnachricht Token-Informationen umfasst,
wobei während des ersten Schrittes die Informationen in Bezug auf die an die Benutzerausrüstung (20) zu sendende Push-Benachrichtigung die Token-Informationen umfassen, wobei die Token-Informationen die Benutzerausrüstung (20) und/oder die Instanz der Anwendung (21) identifizieren,
wobei während eines Registrierungsanforderungsschrittes vor dem Registrierungsbestätigungsschritt eine erste Registrierungsanforderungsnachricht von der Anwendung (21) an den Kurznachrichten-Push-Client (25) gesendet wird und eine zweite Registrierungsanforderungsnachricht von dem Kurznachrichten-Push-Client (25) an den Kurznachrichten-Push-Server (105) gesendet wird, wobei die Token-Informationen Informationen sind, die auf der Grundlage einer Telefonnummer der Benutzerausrüstung (20) und einer Kennung der Anwendung (21) generiert werden,
wobei eine Verknüpfung zwischen der Telefonnummer der Benutzerausrüstung (20), der Kennung der Anwendung (21) und den Token-Informationen nur auf dem Kurznachrichten-Push-Server (105) gespeichert wird.

2. Verfahren nach Anspruch 1, wobei die mindestens eine Kurznachricht - während sie gemäß dem Short Message Service Protocol (SMS-Protokoll) gesendet wird - mittels eines nativen SMS-Routungs-Mechanismus oder mittels Internet Protocol-Transportmitteln in Abhängigkeit von Prioritäten und/oder verfügbaren Kapazitäten des Telekommunikationsnetzes (100) geroutet wird.

3. Verfahren nach einem der vorangehenden Ansprüche, wobei - um die Push-Benachrichtigung von dem Kurznachrichten-Push-Server (105) des Telekommunikationsnetzes (100) an den Kurznachrichten-Push-Client (25) der Benutzerausrüstung (20) zu übertragen - keine etablierte Internet Protocol-Verbindung zwischen der Benutzerausrüstung (20) und dem Telekommunikationsnetz (100) hergestellt werden muss.

4. Verfahren nach einem der vorangehenden Ansprüche, wobei während eines Registrierungsbestätigungsschrittes vor der Durchführung des ersten Schrittes eine zweite Registrierungsbestätigungsnachricht von dem Kurznachrichten-Push-Client (25) an die Anwendung (21) gesendet wird, wobei die zweite Registrierungsbestätigungsnachricht die Token-Informationen enthält.

5. Verfahren nach einem der vorangehenden Ansprüche, wobei in der mindestens einen Kurznachricht, die zur Übertragung der Push-Benachrichtigung verwendet wird, ein Kompressions- und/oder ein Verschlüsselungsverfahren verwendet wird.

6. Telekommunikationsnetz (100) für eine verbesserte Kommunikation zwischen einer Benutzerausrüstung (20) und einem Telekommunikationsnetz (100), wobei die Benutzerausrüstung (20) eine Anwendung (21) und einen Kurznachrichten-Push-Client (25) umfasst, wobei das Telekommunikationsnetz (100) einen Anwendungsserver (111) und einen Kurznachrichten-Push-Server (105) umfasst, wobei die Anwendung (21) Push-Benachrichtigungen verwendet, die von dem Telekommunikationsnetz (100) kommend empfangen werden, wobei das Telekommunikationsnetz (100) so eingerichtet ist, dass für den Fall, dass eine Push-Benachrichtigung von dem Anwendungsserver (111) an die Anwendung (21) der Benutzerausrüstung (20) gesendet werden soll:
- Informationen in Bezug auf die zu sendende Push-Benachrichtigung von dem Anwendungsserver (111) an den Kurznachrichten-Push-Server (105) übertragen werden,
- die Push-Benachrichtigung von dem Kurznachrichten-Push-Server (105) an den Kurznachrichten-Push-Client (25) übertragen wird,
- die Push-Benachrichtigung, die durch den Kurznachrichten-Push-Client (25) empfangen wird, an die Benutzerausrüstung (20) gesendet wird,
wobei das Telekommunikationsnetz (100) so eingerichtet ist, dass die Push-Benachrichtigung von dem Kurznachrichten-Push-Server (105) an den Kurznachrichten-Push-Client (25) als mindestens eine Kurznachricht gemäß dem Short Message Service Protocol (SMS-Protokoll) übertragen wird, wobei die mindestens eine Kurznachricht von einem binären Nachrichtenformat ist, wobei das Telekommunikationsnetz (100) so eingerichtet ist, dass vor dem Senden der Informationen in Bezug auf die Push-Benachrichtigung von dem Anwendungsserver (111) an den Kurznachrichten-Push-Server (105):
- eine erste Registrierungsbestätigungsnachricht von dem Kurznachrichten-Push-Server (105) an den Kurznachrichten-Push-Client (25) gesendet wird, wobei die erste Registrierungsbestätigungsnachricht Token-Informationen umfasst,
wobei das Telekommunikationsnetz (100) so eingerichtet ist, dass die Informationen in Bezug auf die an die Benutzerausrüstung (20) zu sendende Push-Benachrichtigung die Token-Informationen umfassen, wobei die Token-Informationen die Benutzerausrüstung (20) und/oder die Instanz der Anwendung (21) identifizieren,
wobei das Telekommunikationsnetz (100) so eingerichtet ist, dass vor der ersten Registrierungsbestätigungsnachricht eine erste Registrierungsanforderungsnachricht von der Anwendung (21) an den Kurznachrichten-Push-Client (25) gesendet wird und eine zweite Registrierungsanforderungsnachricht von dem Kurznachrichten-Push-Client (25) an den Kurznachrichten-Push-Server (105) gesendet wird,
wobei die Token-Informationen Informationen sind, die auf der Grundlage einer Telefonnummer der Benutzerausrüstung (20) und einer Kennung der Anwendung (21) generiert werden,
wobei das Telekommunikationsnetz (100) so eingerichtet ist, dass eine Verknüpfung zwischen der Telefonnummer der Benutzerausrüstung (20), der Kennung der Anwendung (21) und den Token-Informationen nur auf dem Kurznachrichten-Push-Server (105) gespeichert wird.

7. Telekommunikationsnetz (100) nach Anspruch 6, wobei das Telekommunikationsnetz (100) so eingerichtet ist, dass die mindestens eine Kurznachricht - während sie gemäß dem Short Message Service Protocol (SMS-Protokoll) gesendet wird - mittels eines nativen SMS-Routungs-Mechanismus oder mittels Internet Protocol-Transportmitteln in Abhängigkeit von Prioritäten und/oder verfügbaren Kapazitäten des Telekommunikationsnetzes (100) geroutet wird.

8. Telekommunikationsnetz (100) nach den Ansprüchen 6 oder 7, wobei das Telekommunikationsnetz (100) so eingerichtet ist, dass - um die Push-Benachrichtigung von dem Kurznachrichten-Push-Server (105) des Telekommunikationsnetzes (100) an den Kurznachrichten-Push-Client (25) der Benutzerausrüstung (20) zu übertragen - keine etablierte Internet Protocol-Verbindung zwischen dem Telekommunikationsnetz (100) und der Benutzerausrüstung (20) hergestellt werden muss.

9. Telekommunikationsnetz (100) nach einem der Ansprüche 6 bis 8, wobei das Telekommunikationsnetz (100) so eingerichtet ist, dass vor dem Senden der Informationen in Bezug auf die Push-Benachrichtigung von dem Anwendungsserver (111) an den Kurznachrichten-Push-Server (105):
- eine zweite Registrierungsbestätigungsnachricht von dem Kurznachrichten-Push-Client (25) an die Anwendung (21) gesendet wird, wobei die zweite Registrierungsbestätigungsnachricht die Token-Informationen umfasst.

10. Benutzerausrüstung (20) für eine verbesserte Kommunikation zwischen einer Benutzerausrüstung (20) und einem Telekommunikationsnetz (100), wobei die Benutzerausrüstung (20) eine Anwendung (21) und einen Kurznachrichten-Push-Client (25) umfasst, wobei das Telekommunikationsnetz (100) einen Anwendungsserver (111) und einen Kurznachrichten-Push-Server (105) umfasst, wobei die Anwendung (21) Push-Benachrichtigungen verwendet, die von dem Telekommunikationsnetz (100) kommend empfangen werden, wobei die Benutzerausrüstung (20) so eingerichtet ist, dass für den Fall, dass eine Push-Benachrichtigung von dem Anwendungsserver (111) an die Anwendung (21) der Benutzerausrüstung (20) gesendet werden soll:
- Informationen in Bezug auf die zu sendende Push-Benachrichtigung von dem Anwendungsserver (111) an den Kurznachrichten-Push-Server (105) übertragen werden,
- die Push-Benachrichtigung von dem Kurznachrichten-Push-Server (105) an den Kurznachrichten-Push-Client (25) übertragen wird,
- die Push-Benachrichtigung, die durch den Kurznachrichten-Push-Client (25) empfangen wird, an die Benutzerausrüstung (20) gesendet wird,
wobei die Benutzerausrüstung (20) so eingerichtet ist, dass die Push-Benachrichtigung von dem Kurznachrichten-Push-Server (105) an den Kurznachrichten-Push-Client (25) als mindestens eine Kurznachricht gemäß dem Short Message Service Protocol (SMS-Protokoll) übertragen wird, wobei die mindestens eine Kurznachricht von einem binären Nachrichtenformat ist, wobei die Benutzerausrüstung (20) so eingerichtet ist, dass vor dem Senden der Informationen in Bezug auf die Push-Benachrichtigung von dem Anwendungsserver (111) an den Kurznachrichten-Push-Server (105):
- eine erste Registrierungsbestätigungsnachricht von dem Kurznachrichten-Push-Server (105) an den Kurznachrichten-Push-Client (25) gesendet wird, wobei die erste Registrierungsbestätigungsnachricht Token-Informationen umfasst,
wobei die Benutzerausrüstung (20) so eingerichtet ist, dass die Informationen in Bezug auf die an die Benutzerausrüstung (20) zu sendende Push-Benachrichtigung die Token-Informationen umfassen, wobei die Token-Informationen die Benutzerausrüstung (20) und/oder die Instanz der Anwendung (21) identifizieren,
wobei die Benutzerausrüstung (20) so eingerichtet ist, dass vor der ersten Registrierungsbestätigungsnachricht eine erste Registrierungsanforderungsnachricht von der Anwendung (21) an den Kurznachrichten-Push-Client (25) gesendet wird, und eine zweite Registrierungsanforderungsnachricht von dem Kurznachrichten-Push-Client (25) an den Kurznachrichten-Push-Server (105) gesendet wird,
wobei die Token-Informationen Informationen sind, die auf der Grundlage einer Telefonnummer der Benutzerausrüstung (20) und einer Kennung der Anwendung (21) generiert werden,
wobei die Benutzerausrüstung (20) so eingerichtet ist, dass eine Verknüpfung zwischen der Telefonnummer der Benutzerausrüstung (20), der Kennung der Anwendung (21) und den Token-Informationen nur auf dem Kurznachrichten-Push-Server (105) gespeichert wird.

11. Programm, umfassend einen computerlesbaren Programmcode, der, wenn er auf einem Computer und/oder in einem Netzknoten eines Telekommunikationsnetzes (100), insbesondere auf einem Anwendungsserver (111) und/oder einem Kurznachrichten-Push-Server (105), und/oder in einer Benutzerausrüstung (20), insbesondere teilweise in dem Netzknoten des Telekommunikationsnetzes (100) und teilweise in der Benutzerausrüstung (20), ausgeführt wird, den Computer und/oder den Netzknoten des Telekommunikationsnetzes (100) und/oder die Benutzerausrüstung (20) veranlasst, ein Verfahren nach einem der Ansprüche 1 bis 5 auszuführen.

12. Computerprogrammprodukt zur Verwendung in einem Telekommunikationsnetz (100), wobei das Computerprogrammprodukt ein auf einem Speichermedium gespeichertes Computerprogramm umfasst, wobei das Computerprogramm Programmcode umfasst, der, wenn er auf einem Computer und/oder in einem Netzknoten eines Telekommunikationsnetzes (100), insbesondere auf einem Anwendungsserver (111) und/oder einem Kurznachrichten-Push-Server (105), und/oder in einer Benutzerausrüstung (20), insbesondere teilweise in dem Netzknoten des Telekommunikationsnetzes (100) und teilweise in der Benutzerausrüstung (20), ausgeführt wird, den Computer und/oder den Netzknoten des Telekommunikationsnetzes (100) und/oder die Benutzerausrüstung (20) veranlasst, ein Verfahren nach einem der Ansprüche 1 bis 5 auszuführen.

## Revendications

1. Procédé permettant une communication améliorée entre un équipement d'utilisateur (20) et un réseau de télécommunications (100), dans lequel l'équipement d'utilisateur (20) comprend une application (21) et un client de distribution sélective de messages courts (25), dans lequel le réseau de télécommunications (100) comprend un serveur d'application (111) et un serveur de distribution sélective de messages courts (105), dans lequel l'application (21) utilise des notifications de distribution sélective reçues en provenance du réseau de télécommunications (100), dans lequel, dans le cas où une notification de distribution sélective doit être envoyée du serveur d'application (111) à l'application (21) de l'équipement d'utilisateur (20), le procédé comprend les étapes suivantes :
- dans une première étape, des informations se rapportant à la notification de distribution sélective à envoyer sont transmises du serveur d'application (111) au serveur de distribution sélective de messages courts (105),
- dans une deuxième étape, la notification de distribution sélective est transmise du serveur de distribution sélective de messages courts (105) au client de distribution sélective de messages courts (25),
- dans une troisième étape, la notification de distribution sélective, reçue par le client de distribution sélective de messages courts (25), est mise à la disposition de l'application (21) de l'équipement d'utilisateur (20),
dans lequel la notification de distribution sélective est transmise du serveur de distribution sélective de messages courts (105) au client de distribution sélective de messages courts (25) sous la forme d'au moins un message court selon le protocole de service de messages courts (protocole SMS, *Short Message Service*)*,* dans lequel l'au moins un message court est au format d'un message binaire, dans lequel, au cours d'une étape d'accusé de réception d'enregistrement avant la conduite de la première étape, un premier message d'accusé de réception d'enregistrement est envoyé du serveur de distribution sélective de messages courts (105) au client de distribution sélective de messages courts (25), le premier message d'accusé de réception d'enregistrement comprenant une information de jeton,
dans lequel, au cours de la première étape, les informations se rapportant à la notification de distribution sélective à envoyer à l'équipement d'utilisateur (20) comprennent l'information de jeton, dans lequel l'information de jeton identifie l'équipement d'utilisateur (20) et/ou l'instance de l'application (21),
dans lequel, au cours d'une étape de demande d'enregistrement, avant l'étape d'accusé de réception d'enregistrement, un premier message de demande d'enregistrement est envoyé de l'application (21) au client de distribution sélective de messages courts (25), et un second message de demande d'enregistrement est envoyé du client de distribution sélective de messages courts (25) au serveur de distribution sélective de messages courts (105), dans lequel l'information de jeton est une information créée sur la base d'un numéro de téléphone de l'équipement d'utilisateur (20) et d'un identificateur de l'application (21),
dans lequel un lien entre le numéro de téléphone de l'équipement d'utilisateur (20), l'identificateur de l'application (21) et l'information de jeton n'est stocké que sur le serveur de distribution sélective de messages courts (105).

2. Procédé selon la revendication 1, dans lequel l'au moins un message court - tandis qu'il est envoyé selon le protocole de service de messages courts (protocole SMS) - est acheminé au moyen d'un mécanisme natif d'acheminement de messages SMS ou moyennant l'utilisation de moyens de transport du protocole Internet, en fonction de priorités et/ou de capacités disponibles du réseau de télécommunications (100).

3. Procédé selon l'une des revendications précédentes, dans lequel - afin de transmettre la notification de distribution sélective, du serveur de distribution sélective de messages courts (105) du réseau de télécommunications (100) au client de distribution sélective de messages courts (25) de l'équipement d'utilisateur (20) - il n'est pas nécessaire d'établir une connexion selon le protocole Internet entre l'équipement d'utilisateur (20) et le réseau de télécommunication (100).

4. Procédé selon l'une des revendications précédentes, dans lequel, au cours d'une étape d'accusé de réception d'enregistrement avant la conduite de la première étape, un second message d'accusé de réception d'enregistrement est envoyé du client de distribution sélective de messages courts (25) à l'application (21), le second message d'accusé de réception d'enregistrement comprenant l'information de jeton.

5. Procédé selon l'une des revendications précédentes, dans lequel, dans l'au moins un message court utilisé pour transmettre la notification de distribution sélective, un procédé de compression et/ou de chiffrement est mis en œuvre.

6. Réseau de télécommunications (100) permettant une communication améliorée entre un équipement d'utilisateur (20) et le réseau de télécommunications (100), dans lequel l'équipement d'utilisateur (20) comprend une application (21) et un client de distribution sélective de messages courts (25), dans lequel le réseau de télécommunications (100) comprend un serveur d'application (111) et un serveur de distribution sélective de messages courts (105), dans lequel l'application (21) utilise des notifications de distribution sélective reçues en provenance du réseau de télécommunications (100), dans lequel le réseau de télécommunications (100) est configuré de manière que dans le cas où une notification de distribution sélective doit être envoyée du serveur d'application (111) à l'application (21) de l'équipement d'utilisateur (20) :
- des informations se rapportant à la notification de distribution sélective à envoyer soient transmises du serveur d'application (111) au serveur de distribution sélective de messages courts (105),
- la notification de distribution sélective soit transmise du serveur de distribution sélective de messages courts (105) au client de distribution sélective de messages courts (25),
- la notification de distribution sélective, reçue par le client de distribution sélective de messages courts (25), soit envoyée à l'équipement d'utilisateur (20),
dans lequel le réseau de télécommunications (100) est configuré de manière que la notification de distribution sélective soit transmise du serveur de distribution sélective de messages courts (105) au client de distribution sélective de messages courts (25) sous la forme d'au moins un message court selon le protocole de service de messages courts (protocole SMS), dans lequel l'au moins un message court est au format d'un message binaire, dans lequel le réseau de télécommunications (100) est configuré de manière qu'avant l'envoi des informations se rapportant à la notification de distribution sélective, du serveur d'application (111) au serveur de distribution sélective de messages courts (105) :
- un premier message d'accusé de réception d'enregistrement soit envoyé du serveur de distribution sélective de messages courts (105) au client de distribution sélective de messages courts (25), le premier message d'accusé de réception d'enregistrement comprenant une information de jeton,
dans lequel le réseau de télécommunications (100) est configuré de manière que les informations se rapportant à la notification de distribution sélective à envoyer à l'équipement d'utilisateur (20) comprennent l'information de jeton, dans lequel l'information de jeton identifie l'équipement d'utilisateur (20) et/ou l'instance de l'application (21),
dans lequel le réseau de télécommunications (100) est configuré de manière qu'avant le premier message d'accusé de réception d'enregistrement, un premier message de demande d'enregistrement soit envoyé de l'application (21) au client de distribution sélective de messages courts (25), et un second message de demande d'enregistrement soit envoyé du client de distribution sélective de messages courts (25) au serveur de distribution sélective de messages courts (105), dans lequel l'information de jeton est une information créée sur la base d'un numéro de téléphone de l'équipement d'utilisateur (20) et d'un identificateur de l'application (21),
dans lequel le réseau de télécommunications (100) est configuré de manière qu'un lien entre le numéro de téléphone de l'équipement d'utilisateur (20), l'identificateur de l'application (21) et l'information de jeton ne soit stocké que sur le serveur de distribution sélective de messages courts (105).

7. Réseau de télécommunications (100) selon la revendication 6, dans lequel le réseau de télécommunications (100) est configuré de manière que l'au moins un message court - tandis qu'il est envoyé selon le protocole de service de messages courts (protocole SMS) - soit acheminé au moyen d'un mécanisme natif d'acheminement de messages SMS ou moyennant l'utilisation de moyens de transport du protocole Internet, en fonction de priorités et/ou de capacités disponibles du réseau de télécommunications (100).

8. Réseau de télécommunications (100) selon la revendication 6 ou 7, dans lequel le réseau de télécommunications (100) est configuré de manière que - afin de transmettre la notification de distribution sélective, du serveur de distribution sélective de messages courts (105) du réseau de télécommunications (100) au client de distribution sélective de messages courts (25) de l'équipement d'utilisateur (20) - il ne soit pas nécessaire d'établir une connexion selon le protocole Internet entre le réseau de télécommunications (100) et l'équipement d'utilisateur (20).

9. Réseau de télécommunications (100) selon l'une des revendications 6 à 8, dans lequel le réseau de télécommunications (100) est configuré de manière qu'avant l'envoi des informations se rapportant à la notification de distribution sélective, du serveur d'application (111) au serveur de distribution sélective de messages courts (105) :
- un second message d'accusé de réception d'enregistrement soit envoyé du client de distribution sélective de messages courts (25) à l'application (21), le second message d'accusé de réception d'enregistrement comprenant l'information de jeton.

10. Équipement d'utilisateur (20) permettant une communication améliorée entre l'équipement d'utilisateur (20) et un réseau de télécommunications (100), dans lequel l'équipement d'utilisateur (20) comprend une application (21) et un client de distribution sélective de messages courts (25), dans lequel le réseau de télécommunications (100) comprend un serveur d'application (111) et un serveur de distribution sélective de messages courts (105), dans lequel l'application (21) utilise des notifications de distribution sélective reçues en provenance du réseau de télécommunications (100), dans lequel l'équipement d'utilisateur (20) est configuré de manière que, dans le cas où une notification de distribution sélective doit être envoyée du serveur d'application (111) à l'application (21) de l'équipement d'utilisateur (20) :
- des informations se rapportant à la notification de distribution sélective à envoyer soient transmises du serveur d'application (111) au serveur de distribution sélective de messages courts (105),
- la notification de distribution sélective soit transmise du serveur de distribution sélective de messages courts (105) au client de distribution sélective de messages courts (25),
- la notification de distribution sélective, reçue par le client de distribution sélective de messages courts (25), soit envoyée à l'équipement d'utilisateur (20),
dans lequel l'équipement d'utilisateur (20) est configuré de manière que la notification de distribution sélective soit transmise du serveur de distribution sélective de messages courts (105) au client de distribution sélective de messages courts (25) sous la forme d'au moins un message court selon le protocole de service de messages courts (protocole SMS), dans lequel l'au moins un message court est au format d'un message binaire, dans lequel l'équipement d'utilisateur (20) est conçu de manière qu'avant l'envoi des informations se rapportant à la notification de distribution sélective, du serveur d'application (111) au serveur de distribution sélective de messages courts (105) :
un premier message d'accusé de réception d'enregistrement soit envoyé du serveur de distribution sélective de messages courts (105) au client de distribution sélective de messages courts (25), le premier message d'accusé de réception d'enregistrement comprenant une information de jeton,
dans lequel l'équipement d'utilisateur (20) est configuré de manière que les informations se rapportant à la notification de distribution sélective à envoyer à l'équipement d'utilisateur (20) comprennent l'information de jeton, dans lequel l'information de jeton identifie l'équipement d'utilisateur (20) et/ou l'instance de l'application (21),
dans lequel l'équipement d'utilisateur (20) est configuré de manière qu'avant le premier message d'accusé de réception d'enregistrement, un premier message de demande d'enregistrement soit envoyé de l'application (21) au client de distribution sélective de messages courts (25), et un second message de demande d'enregistrement soit envoyé du client de distribution sélective de messages courts (25) au serveur de distribution sélective de messages courts (105),
dans lequel l'information de jeton est une information créée sur la base d'un numéro de téléphone de l'équipement d'utilisateur (20) et d'un identificateur de l'application (21),
dans lequel l'équipement d'utilisateur (20) est configuré de manière qu'un lien entre le numéro de téléphone de l'équipement d'utilisateur (20), l'identificateur de l'application (21) et l'information de jeton ne soit stocké que sur le serveur de distribution sélective de messages courts (105).

11. Programme comprenant un code de programme lisible par ordinateur, qui, lorsqu'il est exécuté sur un ordinateur et/ou sur un nœud de réseau d'un réseau de télécommunications (100), en particulier un serveur d'application (111) et/ou un serveur de distribution sélective de messages courts (105), et/ou sur un équipement d'utilisateur (20), en particulier en partie sur le nœud de réseau du réseau de télécommunications (100) et en partie sur l'équipement d'utilisateur (20), fait mettre en œuvre à l'ordinateur et/ou au nœud de réseau du réseau de télécommunications (100) et/ou à l'équipement d'utilisateur (20) un procédé selon l'une des revendications 1 à 5.

12. Produit-programme informatique permettant d'utiliser un réseau de télécommunications (100), le produit-programme informatique comprenant un programme informatique stocké sur un support de stockage, le programme informatique comprenant un code de programme qui, lorsqu'il est exécuté sur un ordinateur et/ou sur un nœud de réseau d'un réseau de télécommunications (100), en particulier un serveur d'application (111) et/ou un serveur de distribution sélective de messages courts (105), et/ou sur un équipement d'utilisateur (20), en particulier en partie sur le nœud de réseau du réseau de télécommunications (100) et en partie sur l'équipement d'utilisateur (20), fait mettre en œuvre à l'ordinateur et/ou au nœud de réseau du réseau de télécommunications (100) et/ou à l'équipement d'utilisateur (20) un procédé selon l'une des revendications 1 à 5.
